# EUROPEAN PATENT APPLICATION

(11) **EP 1 724 636 A1**
(43) Date of publication of application: **22.11.2006**
(21) Application number: 06010064.1
(22) Date of filing: 16.05.2006
(51) Int. Cl.: G03B 21/00

(54) **Liquid crystal projector**

(30) Priority: 17.05.2005 JP 2005143548; 09.02.2006 JP 2006031983
(71) Applicant: SEIKO EPSON CORPORATION, Shinjuku-ku, Tokyo 163-0811 (JP)
(72) Inventor: Uehara, Takehiko, Suwa-shi Nagano-ken 392-8502 (JP); Hara, Kazuhiro, Suwa-shi Nagano-ken 392-8502 (JP); Mukaiyama, Hiroyuki, Suwa-shi Nagano-ken 392-8502 (JP)
(74) Representative: HOFFMANN EITLE

(57) **Abstract**

Liquid crystal projector capable of enhancing heat radiation of light modulating means including a liquid crystal light valve, preventing dust or the like from being attached to the surface of the liquid crystal light valve, and making black matrixes formed between pixels in the liquid crystal light valve invisible. The liquid crystal projector includes a light source unit, colored-ray dividing means, light modulating means, colored-ray synthesizing means and optical projection means for enlarging and projecting the synthesized rays means onto a screen. The light modulating means includes entrance dust-proof glasses (420R), (420G), and (420B) made of crystallized quartz or sapphire having a uniaxial crystal structure and disposed on entrance sides of liquid crystal light valves (440R), (440G), and (440B) of the light modulating means, respectively, and exit dust-proof glasses (460R), (460G), and (460B) made of crystallized quartz or sapphire having birefringence and disposed on exit sides thereof, respectively.

## Description

### BACKGROUND

### 1. Technical Field

The present invention relates to a liquid crystal projector displaying an image of a liquid crystal display by projection.

### 2. Related Art

Liquid crystal projectors have been widely known as image projecting apparatuses used for presentation or home theater. The liquid crystal projector includes liquid crystal light valves (liquid crystal panels) as light modulating means and a light source lamp for irradiating light to the liquid crystal light valves and displays an image by projecting light modulated by the liquid crystal panels onto a screen. In order to cope with decrease in size, increase in precision, and increase in brightness in the liquid crystal projector, a light source lamp for irradiating more intensive light is used.

The liquid crystal light valve used in the liquid crystal projector includes a polarizing plate on a light entrance surface and a light exit surface. The polarizing plate has a function of transmitting only a light component parallel to the polarization axis direction from the light source lamp and blocking the other light components. Accordingly, when blocking the light components other than the light component parallel to the polarization axis direction, the polarizing plate generates heat. The heat has a bad influence on the characteristic of the polarizing plate or the liquid crystal panel, thereby deteriorating clearness of an image projected onto the screen. When particles such as dust or damages exist on the surface of the liquid crystal panel, a defect occurs in the projected image. In order to solve such a problem, there has been suggested a projector in which the attachment of dust is prevented and the liquid crystal panel is cooled by bonding glasses to both surfaces of the liquid crystal light valve in a sealed state (for example, see JP-A-9-105901).

The liquid crystal light valve used in the liquid crystal projector has the following problems, in addition to the generation of heat due to light emitted from a light source lamp and the attachment of dust.

A liquid crystal light valve is generally of a dot matrix type and an active matrix liquid crystal panel employing a thin film transistor (TFT) is widely used as such a liquid crystal light valve. Generally, in the liquid crystal light valve of the TFT active matrix type, light blocking portions (black matrix) are formed on a TFT substrate so as to obtain sufficient contrast, thereby preventing entrance of light to TFT or leakage of light from portions other than display electrodes. In a liquid crystal projector employing such a dot matrix liquid crystal light valve, an image including pixels of the liquid crystal light valve is enlarged and projected onto the screen through a projection lens. When the number of pixels is small and the width of the black matrix is relatively large, or when the enlargement magnification is large, the black matrix is projected onto the image, thereby deteriorating image quality. In addition, since the liquid crystal light valve tends to decrease in size, the aperture ratio (ratio between an area of the opened part transmitting light and an area of the black matrix) is decreased, thereby deteriorating the image quality.

### SUMMARY

An advantage of the invention is to provide a liquid crystal projector capable of enhancing heat radiation of light modulating means including a liquid crystal light valve and preventing dust or the like from being attached to the surface of the liquid crystal light valve. Another advantage of the invention is to provide a liquid crystal projector in which black matrixes formed between pixels in the liquid crystal light valve is made to be little visible.

According to an aspect of the invention, a liquid crystal projector comprises: a light source unit; colored-ray dividing means for dividing light emitted from the light source unit into three colored rays; light modulating means including a liquid crystal light valve and serving to modulate the three colored rays on the basis of a given image signal and to emit the modulated rays which are predetermined linear polarized rays; colored-ray synthesizing means for synthesizing the modulated rays; and optical projection means for enlarging and projecting the synthesized ray synthesized by the colored-ray synthesizing means onto a screen. Here, a first dust-proof glass, which is made of crystallized quartz or sapphire having a uniaxial crystal structure and serves to prevent dust from being attached to the light modulating means, is disposed on an entrance side of the liquid crystal light valve of the light modulating means and a second dust-proof glass, which is made of crystallized quartz or sapphire having birefringence and serves to prevent dust from being attached to the light modulating means, is disposed on an exit side thereof.

According to this configuration, since the first dust-proof glass and the second dust-proof glass made of crystallized quartz or sapphire having relatively high heat conductivity are disposed on the entrance and the exit of the light modulating means, the heat resulting from absorption of the light not passing through the light modulating means can be conducted to the dust-proof glasses, thereby efficiently radiating the heat. Accordingly, the characteristic of the light modulating means can be maintained, thereby obtaining a projected image with no brightness blur. It is also possible to prevent dust or the like from being attached to the surface of the light modulating means. In addition, since the second dust-proof glass disposed on the exit of the light modulating means is made of crystallized quartz or sapphire having birefringence, the black matrix is made to be invisible at the time of the synthesized ray onto the screen, by dividing the modulated ray output from the light modulating means into a normal ray and an abnormal ray and projecting the synthesized ray including the divided abnormal ray onto the black matrix, thereby improving the image quality.

A 1/4 wavelength plate and a birefringent plate having birefringence may be disposed in an optical path between the second dust-proof glass having birefringence and the optical projection means, sequentially from an exit surface of the second dust-proof glass.

According to this configuration, since the 1/4 wavelength plate and the birefringent plate having birefringence are disposed sequentially from the exit side of the second dust-proof glass having birefringence, the modulated rays divided into the normal rays and the abnormal rays by the second dust-proof glass are divided again into normal rays and abnormal rays by the birefringent plate and the synthesized rays synthesized by the colored-ray synthesizing means are enlarged and projected onto the screen. The synthesized rays divided into the normal ray and the abnormal ray are projected onto positions spaced apart from each other by a predetermined distance set in the horizontal and vertical directions, at the time of enlargement and projection of the rays onto the screen. The abnormal rays divided in the horizontal direction and the abnormal rays divided in the vertical direction two-dimensionally overlap with the black matrix of the image projected with the normal rays, thereby making the black matrixes further invisible. As a result, the quality of the image enlarged and projected onto the projection plane of the screen is improved.

The light modulating means, the first dust-proof glass, and the second dust-proof glass may be retained in a rectangular tube-shaped support member. According to this configuration, since the light modulating means, the first dust-proof glass, and the second dust-proof glass are retained in the rectangular tube-shaped support member, the heat generated from the light modulating means can be radiated to the rectangular tube-shaped support member through the first dust-proof glass and the second dust-proof glass, thereby enhancing a heat radiation effect of the light modulating means. As a result, the characteristic of the light modulating means can be maintained and thus a projected image with no brightness blur can be obtained.

The 1/4 wavelength plate and the birefringent plate having birefringence may be disposed in an optical path between the second dust-proof glass having birefringence and the colored-ray synthesizing means.

According to this configuration, since the 1/4 wavelength plate and the birefringent plate having birefringence are disposed in the optical path between the second dust-proof glass having birefringence and the colored-ray synthesizing means, the 1/4 wavelength plate and the birefringent plate can form a unit along with the light modulating means, the first dust-proof glass, and the second dust-proof glass. Accordingly, in comparison with the case that the 1/4 wavelength plate and the birefringent plate are disposed separately, it is possible to enhance space efficiency and to contribute to reduction in cost.

The 1/4 wavelength plate may be one of a crystallized-quartz 1/4 wavelength plate, a 1/4 retardation film, a polymer liquid crystal film, and a crystallized-quartz phase plate.

According to this configuration, since a crystallized-quartz 1/4 wavelength plate, a 1/4 retardation film, a polymer liquid crystal film, and a crystallized-quartz phase plate are selectively used as the 1/4 wavelength plate, the degree of freedom can be enhanced and efficient arrangement of the liquid crystal projector can be obtained. When the 1/4 retardation film or the polymer liquid crystal film is used, the small thicknesses of the films can contribute to enhancement in space efficiency. When the crystallized-quartz phase plate is used, it is possible to use light emitted from the light source in a wide bandwidth. In addition, the phase cycle of the light passing through the crystallized-quartz phase plate is shortened with increase in thickness of the crystallized-quartz phase plate, thereby making color blur almost invisible.

The light modulating means, the first dust-proof glass, and the second dust-proof glass may be adhered to and retained in the rectangular tube-shaped support member with a UV-curable adhesive.

According to this configuration, since the light modulating means, the first dust-proof glass, and the second dust-proof glass are adhered to and retained in the support member with a UV-curable adhesive, the durability of the retaining and fixing member can be enhanced against the light passing through the respective elements from the light source unit or the heat generated from the light modulating means.

The light modulating means, the first dust-proof glass, the second dust-proof glass, the 1/4 wavelength plate, and the birefringent plate may be retained in a rectangular tube-shaped support member.

According to this configuration, since the light modulating means, the first dust-proof glass, the second dust-proof glass, the 1/4 wavelength plate, and the birefringent plate are retained in a rectangular tube-shaped support member, it is possible to radiate the heat generated from the light modulating means to the rectangular tube-shaped member, thereby enhancing the heat radiation effect of the light modulating means. The total thickness in the ray traveling direction of the liquid crystal unit is increased, but the distance between the exit surface of the second dust-proof glass having a dust-proof function and the pixel display surface of the light modulating means is greatly increased. Accordingly, even when dust or the like is attached to the exit surface of the second dust-proof glass, the attached dust is spaced apart from the focal position of a projection lens and becomes a defocusing portion, thereby further preventing deterioration in quality of an image projected onto the projection plane of the screen.

The 1/4 wavelength plate may be one of a crystallized-quartz 1/4 wavelength plate, a 1/4 retardation film, a polymer liquid crystal film, and a crystallized-quartz phase plate, and the second dust-proof glass, the 1/4 wavelength plate, and the birefringent plate may be integrally bonded to each other. Here, when the 1/4 wavelength plate is one of the crystallized-quartz 1/4 wavelength plate and the crystallized-quartz phase plate, the second dust-proof glass and the 1/4 wavelength plate may be bonded to each other with a UV-curable adhesive and the 1/4 wavelength plate and the birefringent plate may be bonded to each other with a UV-curable adhesive. When the 1/4 wavelength plate is one of the 1/4 retardation film and the polymer liquid crystal film, the second dust-proof glass and the 1/4 wavelength plate may be bonded to each other with an acrylic adhesive and the 1/4 wavelength plate and the birefringent plate may be bonded to each other with an acrylic adhesive.

According to this configuration, since the second dust-proof glass, the 1/4 wavelength plate, and the birefringent plate are integrally bonded to each other, the workability of assembly can be enhanced and they can be retained in and fixed to the support member with high precision. Since the second dust-proof glass and the 1/4 wavelength plate or the 1/4 wavelength plate and the birefringent plate are bonded to each other with a UV-curable adhesive when the 1/4 wavelength plate is the crystallized-quartz 1/4 wavelength plate or the crystallized-quartz phase plate, the transparency after curing the UV-curable adhesive is great, thereby preventing deterioration in transmittance due to the bonding. On the other hand, since they are bonded to each other with an acrylic adhesive when the 1/4 wavelength plate is the 1/4 retardation film or the polymer liquid crystal film, distortion resulting from difference in linear expansion coefficient between the second dust-proof glass and the 1/4 retardation film or the polymer liquid crystal film can be absorbed by the adhesive, thereby enhancing the durability of the bonding portions. In addition, it is possible to suppress deterioration in transmittance due to the bonding.

### BRIEF DESCRIPTION OF THE DRAWINGS

The invention will be described with reference to the accompanying drawings, wherein like numbers reference like elements.

Fig. 1 is a plan view schematically illustrating a liquid crystal projector according to a first embodiment of the present invention.

Fig. 2 is a partial plan view illustrating an optical system.

Fig. 3 is a schematic diagram illustrating a ray transmission state from an exit dust-proof glass to a birefringent plate.

Figs. 4A to 4C are schematic diagrams illustrating a ray division state.

Fig. 5 is a partial plan view illustrating an optical system according to a second embodiment.

Fig. 6 is a partial plan view illustrating an optical system according to a third embodiment.

### DESCRIPTION OF EXEMPLARY EMBODIMENTS

Exemplary embodiments of the present invention will be described in detail with reference to the attached drawings.

### First Embodiment

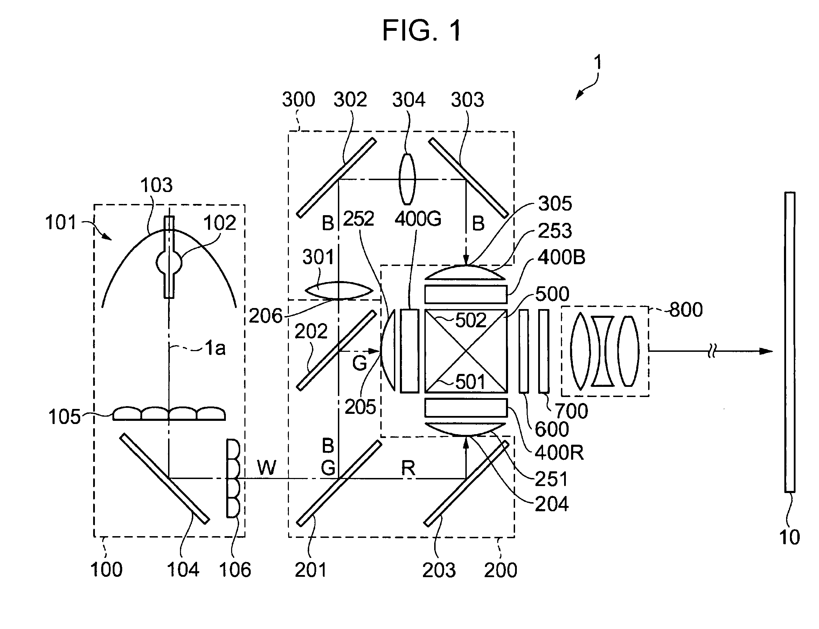

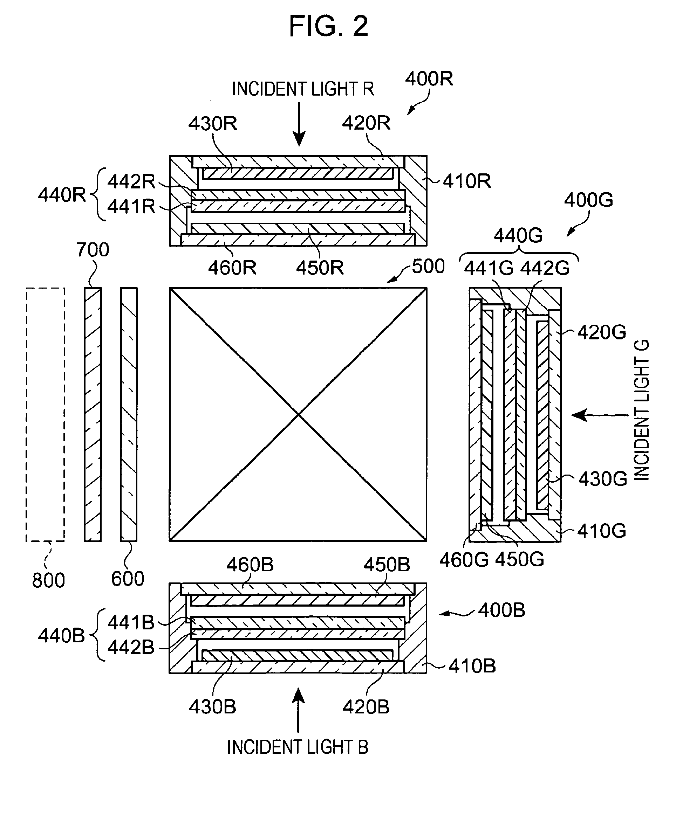

Fig. 1 is a plan view schematically illustrating a liquid crystal projector according to a first embodiment of the invention and Fig. 2 is a partial plan view illustrating an optical system.

Referring to Fig. 1, the liquid crystal projector 1 includes a lighting optical system 100, a colored-ray dividing optical system 200 as colored-ray dividing means, liquid crystal units 400R, 400G, and 400B, dichroic prism 500 (hereinafter, referred to as prism) as colored-ray synthesizing optical means, a 1/4 wavelength plate 600, a birefringent plate 700 as a second birefringent plate, and a projection lens 800 as optical projection means. The liquid crystal projector 1 further includes a relay lens system 300 for guiding blue rays B among colored rays divided by the colored-ray dividing optical system 200 to the liquid crystal unit 400B.

The lighting optical system 100 includes a reflecting mirror 104 for bending an optical axis 1a of light emitted from the light source unit 101 at the right angle toward the front side of the projector and integrator lenses 105 and 106 as uniform lighting optical elements which are perpendicular to each other with the reflecting mirror 104 therebetween. The light source unit 101 further includes a light source lamp 102 for emitting white light in the radial form and a reflector 103 for outputting the radial light emitted from the light source lamp 102 as rays almost parallel to each other. For example, a high-brightness lamp such as a metal halide lamp, a xenon lamp, and a mercury lamp is used as the light source lamp 102.

The integrator lenses 105 and 106 have a plurality of rectangular lenses arranged in a matrix shape. The integrator lens 105 divides the rays of the light emitted from the light source unit 101 into a plurality of partial rays and collects the partial rays in the vicinity of the integrator lens 106. The integrator lens 106 serves to overlap the partial rays output from the integrator lenses 105 on the liquid crystal units 400R, 400G, and 400B (liquid crystal light valves 410R, 410G, and 410B).

The colored-ray dividing optical system 200 serves to divide the light emitted from the lighting optical system 100 into three colored rays of R, G, and B having different wavelength bands. The colored-ray dividing optical system 200 includes a blue-green reflecting dichroic mirror 201, a green reflecting dichroic mirror 202, and a reflecting mirror 203. First, the blue-green reflecting dichroic mirror 201 transmits red rays R and reflects blue rays B and green rays G at the right angle among the rays W passing through the uniform lighting optical element (integrator lenses 105 and 106). The reflected blue rays B and the reflected green rays G travel to the green reflecting dichroic mirror 202.

The red rays R passing through the blue-green reflecting dichroic mirror 201 are reflected at the right angle by the reflecting mirror 203 and is output from an exit portion 204 for the red rays R to the prism 500. On the other hand, only the green rays G among the blue rays B and the green rays G reflected by the blue-green reflecting dichroic mirror 201 are reflected at the right angle by the green reflecting dichroic mirror 202 and is output from an exit portion 205 for the green rays G to the prism 500. The blue rays B passing through the green reflecting dichroic mirror 202 are output from an exit portion 206 for the blue rays B to the relay lens system 300. Distances from the lighting optical system 100 having the above-mentioned structure to the exit portions 204, 205, and 206 for the respective colors are equal to each other.

Light condensing lenses 251 and 252 are disposed in exits of the exit portions 204 and 205 for the red rays R and the green rays G of the colored-ray dividing optical system. Accordingly, the red rays R and the green rays G output from the exit portions are incident on the light condensing lenses 251 and 252 and are made to be parallel to each other. The parallel red rays and green rays R and G are incident on the liquid crystal units 400R and 400G.

On the other hand, the blue rays B enter the liquid crystal unit 400B through the relay lens system 300. The relay lens system 300 includes, a light condensing lens 301, an entrance reflecting mirror 302, an exit reflecting mirror 303, and an intermediate mirror 304 disposed between the reflecting mirrors. A condensing lens 253 for making the output blue rays B be parallel to each other is disposed in the exit portion 305 for blue rays B of the relay lens system 300. The blue rays B made to be parallel to each other by the condensing lens 253 enter the liquid crystal unit 400B as a light modulating unit.

Among lengths of optical paths of the colored rays R, G, and B entering the liquid crystal units 400R, 400G, and 400B, that is, among distances from the light source unit 101 to the liquid crystal light valves 410R, 410G, and 410B constituting the liquid crystal units to be described later, the length of the optical path of the blue rays B is largest. Accordingly, the light loss of the blue rays is greatest, but the light loss can be suppressed by disposing the relay lens system 300. When the relay lens system 300 is not disposed in the optical path of the blue rays B, the lighted area of the liquid crystal light valve 410B lighted by the blue rays B become larger than the lighted area of the liquid crystal light valve lighted by the other colored rays, thereby deteriorating lighting efficiency.

The liquid crystal units 400R, 400G, and 400B as the light modulating unit for modulating the colored rays will be described with reference to the partial plan view shown in Fig. 2 partially illustrating an optical system.

The liquid crystal unit 400B includes an entrance dust-proof glass 420B as the first dust-proof glass, an entrance polarizing plate 430B, a liquid crystal light valve 440B, an exit polarizing plate 450B, and an exit dust-proof glass 460B as the second dust-proof glass and the first birefringent plate in a support member 410B, sequentially from the side which the blue rays B enter through the relay lens system 300 and the light condensing lens 253. Similarly, the liquid crystal units 400R and 400G include entrance dust-proof glasses 420R and 420G as the first dust-proof glass, entrance polarizing plates 430R and 430G, liquid crystal light valves 440R and 440G, exit polarizing plates 450R and 450G, and exit dust-proof glasses 460R and 460B as the second dust-proof glass in support members 410R and 410G, sequentially from the sides which the red rays R and the green rays G enter through the light condensing lenses 251 and 252, respectively. The liquid crystal light valve 440, the entrance polarizing plate 430, and the exit polarizing plate 450 constitute light modulating means.

The entrance dust-proof glasses 420R, 420G, and 420B are made of crystallized quartz having a uniaxial crystal (tetragonal, hexagonal, and trigonal crystal) structure of non-birefringence and having excellent heat conductivity (heat radiation). The optical axis of the entrance dust-proof is perpendicular to the entrance surface. The entrance dust-proof glass 420 may be made of sapphire having a uniaxial crystal structure, in addition to the crystallized quartz.

The entrance polarizing plates 430R, 430G, and 430B are polarizing plates selectively transmitting only linear polarized rays of one direction. The entrance polarizing plates 430 are polarizing bodies formed by adsorbing and dispersing iodine in polyvinyl alcohol (PVA) into a film shape, stretching the film in a constant direction, and then stacking acetate cellulose films on both surfaces of the stretched film.

The entrance polarizing plates 430R, 430G, and 430B are bonded to the exit surfaces of the entrance dust-proof glasses 420R, 420G, and 420B with an acrylic adhesive so as not to generate air bubbles, respectively. Since the entrance polarizing plates 430 are bonded to the entrance dust-proof glasses 420 with the adhesive, distortion resulting from difference in linear expansion coefficient between the entrance dust-proof glasses 420 and the entrance polarizing plates 430 can be absorbed by the adhesive, thereby enhancing durability of the bonding portions. In addition, it is possible to suppress decrease in transmittance of rays passing through the entrance dust-proof glasses 420 and the entrance polarizing plates 430.

The transmission axis (polarization axis) of the entrance polarizing plates 430 is set to be equal to a predetermined polarization axis of the linear polarized rays input thereto. Accordingly, the entrance polarizing plates 430 generate more heat (increase the temperature) so as to block a part f the modulated rays. However, since the entrance polarizing plates 430 are bonded to the entrance dust-proof glasses 420 made of crystallized quartz having excellent heat conductivity (heat radiation), respectively, it is possible to suppress the generation of heat. It is preferable that the heat conductivity of the entrance dust-proof glasses 420 is about 5.0 W/mK or more so as to secure the heat radiation necessary for the liquid crystal projector. The transmittance of the polarizing plates is generally about 40%, which is relatively low.

The entrance dust-proof glasses 420 and the entrance polarizing plates 430 are disposed to correspond to effective display areas of the liquid crystal light valves 440 having an approximate rectangular shape and thus all have an approximate rectangular shape. The exit dust-proof glasses 460 and the exit polarizing plates 450 all have an approximate rectangular shape, similarly.

The liquid crystal light valves 440R, 440G, and 440B are liquid crystal panels employing a thin film transistor (TFT) as a switching element of a pixel. The liquid crystal light valves 440 include exit substrate 441R, 441G, and 441B and entrance substrates 442R, 442G, and 442B, respectively, with a liquid crystal layer (not shown) therebetween. As the substrates 441 and 442 can is used a transparent optical glass substrate made of quartz glass or Neo Ceram (made by Nippon Electric Glass Co., Ltd.). The liquid crystal light valves 440 are a liquid crystal panel employing twist nematic liquid crystal. The liquid crystal light valves 440 are subjected to an alignment process so that the alignment direction of liquid crystal molecules close to the entrance substrates 442 and the alignment direction of liquid crystal molecules close to the exit substrates 441 form an angel of about 90°.

TFTs and transparent pixel electrodes not shown are disposed on the surface of each exit substrate 441 opposed to the liquid crystal layer. A transparent common electrode (not shown) is disposed on the surface of each entrance substrate 442 opposed to the liquid crystal layer. The TFTs are disposed around a plurality of pixel electrodes arranged in a matrix shape and are electrically connected to the pixel electrodes, respectively. Each pixel includes a pixel electrode, a common electrode, and a liquid crystal layer interposed therebetween. Light blocking portions (black matrixes) partitioning the pixels are disposed between each entrance substrate 442 and the transparent common electrode. The black matrixes serve to prevent light from entering the TFTs and to prevent light from leaking from portions other than display electrodes.

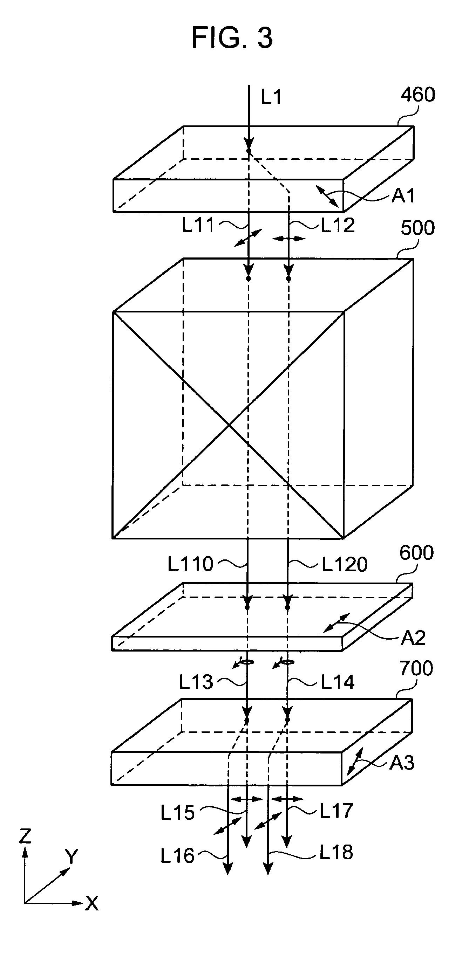

The exit dust-proof glasses 460R, 460G, and 460B are made of crystallized quartz having birefringence and excellent heat conductivity (heat radiation). Each exist dust-proof glass 460 serves as a pixel division device for dividing incident rays into two modulated rays of normal rays and abnormal rays. The optical axis of each exit dust-proof glass 460 is set to a direction A1 (see Fig. 3) forming an angle of 45° along with the vertical axis (Z axis; see Fig. 3) of the incident surface. The exit dust-proof glasses may be made of sapphire having birefringence, in addition to the crystallized quartz. The heat conductivity of the sapphire is about 46 W/mK at 25°C and the heat radiation thereof is excellent.

The exit polarizing plates 450R, 450G, and 450B are made of the same polarizing body as the entrance polarizing plates 430 and are bonded to the entrance surface of the exit dust-proof glasses 460 with an acrylic adhesive so as not to generate air bubbles, similarly to the entrance polarizing plates 430. The transmission axis of each exit polarizing plate 450 is perpendicular to the transmission axis of the corresponding entrance polarizing plate 430 attached to the corresponding entrance dust-proof glass 420 and thus operates in a so-called normally white mode in which the corresponding liquid crystal light valve 440 is bright without application of a voltage.

Each support member 410 is an approximate rectangular tube-shaped support member made of a high heat-conductivity material such as aluminum. The entrance dust-proof glass 420 of which the exit surface is attached to the corresponding entrance polarizing plate 430, the liquid crystal light valve 440, and the exit dust-proof glass 460 of which the entrance surface is attached to the corresponding exit polarizing plate 450 are arranged with a predetermined gap of 1 to 10 mm inside the support member 410, sequentially from the side which the colored rays enter. They are retained in and fixed to the support member 410 with an adhesive or the like, thereby constituting the corresponding liquid crystal unit 400R, 400G, and 400B.

It is preferable that an UV-curable adhesive is used as the adhesive for retaining and fixing the elements to the support member 410. Examples of the UV-curable adhesive can include UT-20 and M05 (made by Adel Co., Ltd.) and PHOTO100 and 300 (made by Sunrise MSI Co., Ltd.). It is possible to enhance durability of the retaining and fixing portions by using the UV-curable adhesive.

When the parallel colored rays enter the liquid crystal units 400R, 400G, and 400B through the condensing lenses 251, 252, and 253, respectively, the colored rays linearly pass from the entrance surfaces of the entrance dust-proof glasses 420R, 420G, and 420B to the exit surfaces thereof and enter the entrance polarizing plates 430R, 430G, and 430B, respectively. In each entrance polarizing plate 430, the polarization directions of the colored rays are made to be parallel to each other (only the rays having the same direction as the polarization axis are transmitted). Then, the parallel colored rays enter the liquid crystal light valves 400R, 440G, and 440B. The colored rays entering the liquid crystal light valves 440 are controlled in accordance with image signals corresponding to image information given from driving means (not shown). That is, the liquid crystal light valves modulate the colored rays passing therethrough to form an image.

The modulated rays modulated by each liquid crystal light valve 440 enter the corresponding exit polarizing plate 450R, 450G, and 450B. The polarization axis of the exit polarizing plate 450 is set to be equal to a predetermined polarization direction of the entering modulated rays modulated by the liquid crystal light valve 440. The exit polarizing plate 450 transmits most of the modulated rays but generates heat from some rays leaking due to reflection or the like. However, since the exit polarizing plate is bonded to the exit dust-proof glass 460 made of crystallized quartz having excellent heat conductivity (heat radiation), the generation of heat can be suppressed.

The modulated rays passing through the exit polarizing plates 450 enter the exit dust-proof glasses 460R, 460G, and 460B, respectively.

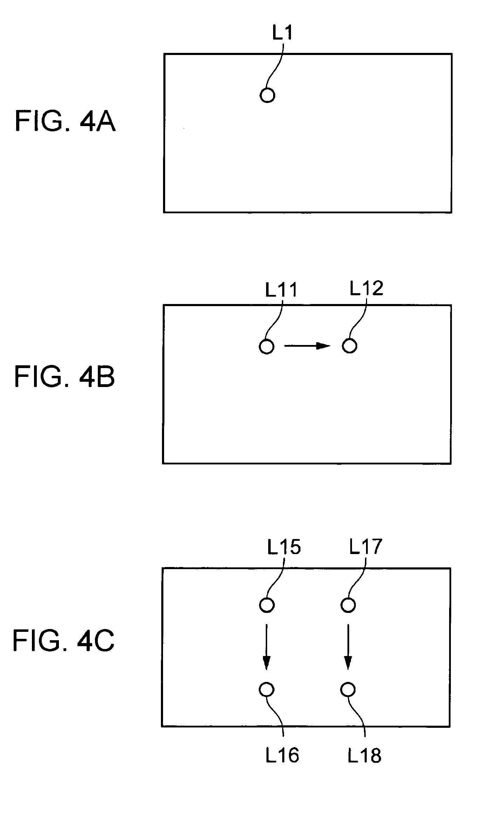

In the exit dust-proof glasses 460, the linear polarized rays are divided into two kinds of modulated rays of normal rays and abnormal rays and the divided modulated rays are emitted to the prism 500. The division of the modulated rays will be described later with reference to Figs. 3 and 4.

The dichroic prism 500 as the colored-ray synthesizing means serves to synthesize the colored rays modulated by the light modulating unit.

The prism 500 includes an R-ray reflecting dichroic plane 501 for reflecting the R rays and a B-ray reflecting dichroic plane 502 for reflecting the B rays. The R-ray reflecting dichroic plane 501 and the B-ray reflecting dichroic plane 502 are formed in an X shape by disposing a dielectric multi-layered film for reflecting the R rays and a dielectric multi-layered film for reflecting the B rays in the interfaces between four right-angled prisms. The three kinds of modulated rays R, G, and B entering the prism 500 are synthesized to form light indicating a color image (see Fig. 1).

The synthesized light indicating a color image synthesized by the prism 500 passes the 1/4 wavelength plate 600 and the birefringent plate 700 as the second birefringent plate and is enlarged and projected onto a projection plane of the screen 10 disposed at a predetermined position through the projection lens 800 as the optical projection means. The birefringent plate 700 serves as a pixel division device for dividing the input rays into two kinds of modulated rays of normal rays and abnormal rays, similarly to the exit dust-proof glasses 460.

Fig. 3 is a schematic diagram illustrating a ray transmission state from the exit dust-proof glass 460 to the birefringent plate 700 and Fig. 4 is a schematic diagram illustrating a ray division state.

Referring to Fig. 3, the optical axis of the 1/4 wavelength plate 600 is set to a direction A2 forming an angle of 45° about the X axis on the entrance surface. The birefringent plate 700 is made of crystallized quartz having birefringence and excellent heat conductivity (heat radiation), similarly to the exit dust-proof glasses 460. The optical axis of the birefringent plate 700 is set to a direction A3 forming an angle of 45° about the Y axis in the X-Z plate perpendicular to the entrance surface.

A crystallized-quartz 1/4 wavelength plate, a 1/4 retardation film, or a polymer liquid crystal film may be used as the 1/4 wavelength plate 600.

The crystallized-quartz 1/4 wavelength plate is a wavelength plate in which a plurality of crystallized quartz plates with different thicknesses polished to obtain a 1/4 phase difference are optically contacted with each other.

The 1/4 retardation film is an aromatic PC film obtained by uniaxially stretching polycarbonate (PC). The 1/4 retardation film has reciprocal wavelength dispersibility that birefringence is increased with increase in wavelength and can continuously provide 1/4 phase difference in a wide bandwidth of visible rays. Examples of the 1/4 retardation film can include pure ace (R) WR and W147 (made by Teijin Chemicals Ltd.).

The polymer liquid crystal film is a liquid crystal film obtained by forming a polymer liquid crystal layer made of a liquid crystal material such as nematic liquid crystal to which a photo-curable polymer material is added on a support film with horizontal alignment, irradiating light thereto, and fixing a state that the liquid crystal molecules are aligned vertically at a tilting angle of 45°. The thickness of the polymer liquid crystal layer formed on the support film is about 0.2 to 10µm.

The thicknesses of the 1/4 retardation film and the polymer liquid crystal film are not particularly limited, but preferably is about 0.1 mm from the view point of practical treatment. Accordingly, by selectively using the crystallized-quartz 1/4 wavelength plate, the 1/4 retardation film, and the polymer liquid crystal film as the 1/4 wavelength plate 600, the degree of freedom is increased, thereby accomplishing efficient arrangement.

Next, the ray transmission state and the ray division state from the exit dust-proof glasses 460 to the birefringent plate 700 will be described with reference to Figs. 3 and 4.

A linear polarized ray L1 modulated by the liquid crystal light valve 440 and the exit polarized plate 450 enters the exit dust-proof glass 460 (see Fig. 4A). The linear polarized ray L1 entering the exit dust-proof glass 460 is divided into two linear polarized rays L11 and L12 perpendicular to each other by means of the birefringence of the exit dust-proof glass 460 (Fig. 4B) and then the divided linear polarized rays enter the prism 500. Since the divided linear polarized rays L11 and L12 are modulated by the liquid crystal light valve 440 and have the same light intensity, because the optical axes thereof in the entrance surface of the exit dust-proof glass 460 having a birefringent function forms an angle of 45° about the linear polarized ray L1.

Modulated rays of three colors R, G, and B are synthesized in a unit of divided linear polarized rays L11 and L12 by the prism 500 and the synthesized rays L110 and L120 enter the 1/4 wavelength plate 600.

The 1/4 wavelength plate 600 changes the polarization direction of the synthesized rays L110 and L120 indicating an input color image from the linear polarized rays to circular polarized ray. The changed circular polarized rays L13 and L14 enter the birefringent plate 700.

The birefringent plate 700 divides the circular polarized ray L13 into two linear polarized rays L15 and L16 vertically and horizontally perpendicular to each other with respect to the entrance surface by means of birefringence of the birefringent plate 700 and outputs the divided linear polarized rays (see Fig. 4C). Similarly, the circular polarized ray L14 is divided into two linear polarized rays L17 and L18 perpendicular to each other by means of the birefringence of the birefringent plate 700 and then the divided linear polarized rays are output (see Fig. 4C).

A distance with which a ray is divided into a normal ray and an abnormal ray in the exit dust-proof glass 460 and the birefringent plate 700 is proportional to the thicknesses of the exit dust-proof glass 460 and the birefringent plate 700. The distance is set to a desired value in consideration of the width of the light blocking portions (black matrixes) partitioning the pixels between the entrance substrate 442 of the liquid crystal light valve 440 and the transparent common electrode. Accordingly, the thicknesses of the exit dust-proof glass 460 and the birefringent plate 700 are preferably set to the same value.

The linear polarized rays L15 and L16 and the linear polarized rays L17 and L18 passing through the birefringent plate 700 are enlarged and projected onto the projection plane of the screen 10 disposed at a predetermined position. A color image based on the linear polarized rays passing through the birefringent plate 700 is displayed on the projection plane of the screen 10.

The linear polarized rays L15, L16, L17, and L18 divided into the normal rays and the abnormal rays are projected onto positions apart from each other by a predetermined distant set in the horizontal and vertical directions at the time of enlargement and projection. The linear polarized rays are projected to four points of a tetragonal shape. Accordingly, the abnormal rays divided in the horizontal direction and the abnormal rays divided in the vertical direction overlap with the black matrixes of the image projected with the normal rays, thereby making the black matrix almost invisible. As a result, the quality of the image enlarged and projected onto the projection plane of the screen 10 is improved. This is particularly advantageous for enlargement and projection of an image.

In the liquid crystal projector having the above-mentioned configuration, since the entrance polarizing plate 430 and the exit polarizing plate 450 of the liquid crystal unit 400 are bonded to the exit dust-proof glass 420 and the exit dust-proof glass 460 made of crystallized quartz having excellent heat conductivity, respectively, the heat resulting from the absorption of the light not passing through the polarizing plates can be conducted to the dust-proof glasses, thereby efficiently radiating the heat. As a result, the characteristics of the polarizing plates 430 and 450 and the liquid crystal light valves 440 can be maintained, thereby obtaining a projected image with no brightness blur.

In addition, since the entrance dust-proof glass 420 and the exit dust-proof glass 460 are disposed on both sides of each liquid crystal light valve, it is possible to prevent dust or the like from being attached to the surface of the liquid crystal light valve 440. Even when dust or the like is attached to the exit surface of the exit dust-proof glass 460, the dust or the like is a defocused portion of the projection lens 800 because the dust on the exit surface of the exit dust-proof glass is apart from the pixel display plane of the liquid crystal light valve 440, thereby preventing the deterioration in quality of the image projected onto the projection plane of the screen 10. In addition, since the entrance polarizing plate 430 and the exit polarizing plate 450 are bonded to the entrance dust-proof glass 420 and the exit dust proof glass 460, respectively, and is spaced apart from the corresponding liquid crystal light valve 440, it is possible to suppress the variation in polarization characteristic.

### Second Embodiment

A second embodiment of the invention provides a liquid crystal projector in which the 1/3 wavelength plate 600 and the birefringent plate 700 as the second birefringent plate disposed between the dichroic prism 500 and the projection lens 800 in the first embodiment are disposed inside the liquid crystal unit. Accordingly, the configuration and function other than the liquid crystal unit 400 are similar to those of the first embodiment and thus description thereof will be omitted.

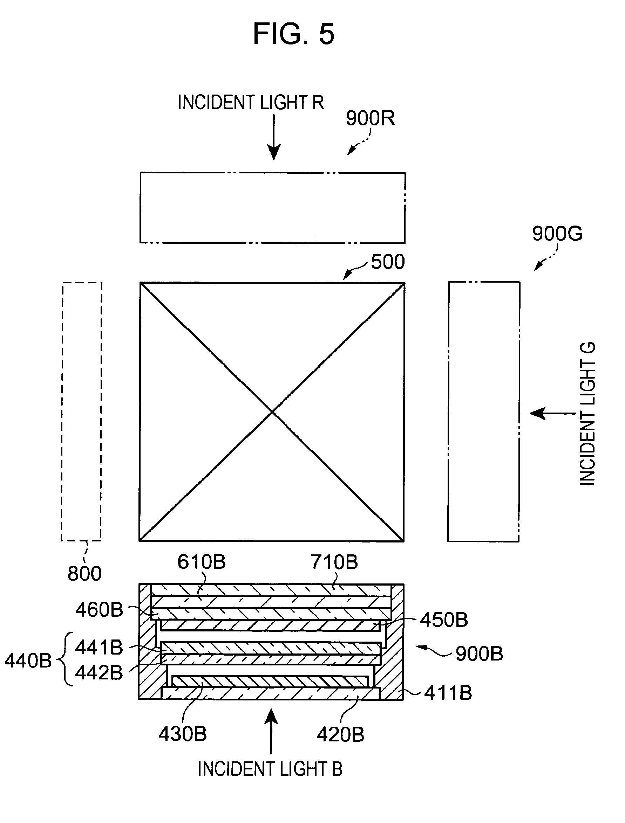

Fig. 5 is a partial plan view illustrating an optical system according to the second embodiment of the invention. The same elements as the first embodiment are denoted by the same reference numerals.

Liquid crystal units 900R, 900G, and 900B have the same structure. Colored rays are incident on the liquid crystal units 900R, 900G, and 900B through the light condensing lenses 251, 252, and 253 from the colored-ray dividing optical system 200 and the relay lens system 300. Each liquid crystal unit 900 includes an entrance dust-proof glass 420 as the first dust-proof glass, an entrance polarizing plate 430, a liquid crystal light valve 440, an exit polarizing plate 450, an exit dust-proof glass 460 as the second dust-proof glass and the first birefringent plate, a 1/4 wavelength plate 610, and a birefringent plate 710 inside a support member 411, sequentially from the side which the colored rays enter.

The exit dust-proof glass 460 is made of crystallized quartz having birefringence and excellent heat conductivity (heat radiation) and the optical axis is set to a direction A1 (see Fig. 3) forming 45° about the vertical axis (Z axis; see Fig. 3) in the entrance surface. Each exit polarizing plate 450R, 450G, and 450B is made of the same polarizing material as the entrance polarizing plate 430 and is bonded to the entrance surface of the corresponding exit dust-proof glass 460 with an acrylic adhesive so as not to generate air bubbles. The transmission axis of the exit polarizing plate 450 is perpendicular to the transmission axis of the entrance polarizing plate 430 bonded to the entrance dust-proof glass 420. Accordingly, the liquid crystal light valve 440 is bright without application of a voltage. That is, the liquid crystal light valve 440 operates in a so-called normally white mode. The exit dust-proof glass 460 may be made of sapphire having birefringence, in addition to the crystallized quartz. The heat conductivity of sapphire is about 46 W/mK at 25°C and has excellent heat radiation.

The 1/4 wavelength plate 610 and the birefringent plate 710 are sequentially bonded to the exit surface of the exit dust-proof glass 460 with an optical adhesive or the like so as not to generate air bubbles, thereby forming a body. They are bonded to and retained in the support member 411 with a UV-curable adhesive. Accordingly, in the second embodiment, instead of the exit dust-proof glass 460, the birefringent plate 710 has a function of a dust-proof glass against dust or the like.

Since the exit dust-proof glass 460, the 1/4 wavelength plate 610, and the birefringent plate 710 are bonded integrally to each other in advance, the workability of assembly is improved and they can be retained in and fixed to the support member 411 with high precision.

A crystallized-quartz 1/4 wavelength plate, a 1/4 retardation film, and a polymer liquid crystal film may be selectively used as the 1/4 wavelength plate 610.

When the crystallized-quartz 1/4 wavelength plate is used as the 1/4 wavelength plate 610, it is preferable that the bonding between the exit dust-proof glass 460 and the 1/4 wavelength plate 610 is performed by the use of a UV-curable adhesive. Examples of the UV-curable adhesive can include UT-20 and M05 (made by Adel Co., Ltd.) and PHOTO100 and 300 (made by Sunrise MSI Co., Ltd.). Since such a UV-curable adhesive has excellent workability and high transparency after being cured with UV rays, it is possible to suppress decrease in transmittance due to the bonding.

When the 1/4 retardation film or the polymer liquid crystal film is used as the 1/4 wavelength plate 610, an acrylic adhesive can be preferably used. By using the acrylic adhesive, distortion resulting from difference in linear expansion coefficient between the exit dust-proof glass 460 and the 1/4 retardation film or between the exit dust-proof glass 460 and the polymer liquid crystal film can be absorbed by the adhesive, thereby enhancing the durability of the bonded portion. It is also possible to suppress decrease in transmittance due to the bonding.

The same is true of the bonding between the 1/4 wavelength plate 610 and the birefringent plate 710 and thus description thereof will be omitted.

The optical axis of the 1/4 wavelength plate 610 is set to a direction A2 forming an angle of 45° about the X axis in the entrance surface thereof (see the 1/4 wavelength plate 600 shown in Fig. 3). The birefringent plate 710 is made of crystallized quartz having birefringence and excellent heat conductivity (heat radiation), similarly to the exit dust-proof glass 460. The optical axis of the birefringent plate 710 is set to a direction A3 forming an angle of ° about the Y axis in the X-Z plane perpendicular to the entrance surface thereof (see the birefringent plate 700 shown in Fig. 3).

When the colored rays are incident on the liquid crystal units 900R, 900G, and 900B having the above-mentioned structure, the incident colored rays are modulated while passing through the entrance dust-proof glass 420, the entrance polarizing plate 430, the liquid crystal light valve 440, and the exit polarizing plate 450. The modulated colored rays are incident on the exit dust-proof glass 460 and are divided into two kinds of linear polarized rays perpendicular to each other by means of the birefringence of the exit dust-proof glass 460. The colored rays divided into two kinds of linear polarized rays are incident on the 1/4 wavelength plate 610 and the linear polarized rays are changed to circular polarized rays. The circular polarized rays are incident on the birefringent plate 710. The circular polarized rays are divided into two kinds of linear polarized rays perpendicular to each other in the horizontal direction and the vertical direction with respect to the entrance surface by means of the birefringence and are then incident on the prism 500 (see Fig. 4).

Among the linear polarized rays incident on the prism 500, the modulated rays of three colors R, G, and B are synthesized in a unit of a linear polarized ray divided into four rays. The synthesized rays indicating a synthesized color image are enlarged and projected onto the projection plane of the screen 10 disposed at a predetermined position through the projection lens 800 to form the color image.

At the time of enlargement and projection, in the synthesized rays indicating the synthesized color image, the linear polarized rays divided into normal rays and abnormal rays are projected onto positions spaced apart from each other by a predetermined distance set in the horizontal and vertical directions. The synthesized rays are projected to four points of a tetragonal shape. Accordingly, the abnormal rays divided in the horizontal direction and the abnormal rays divided in the vertical direction two-dimensionally overlap with the black matrixes of the image projected with the normal rays, thereby making the black matrixes almost invisible. As a result, the quality of the image enlarged and projected onto the projection plane of the screen 10 is improved.

Even when the linear polarized rays modulated while passing through the liquid crystal light valve 440 and the exit polarizing plate 450 and the optical axis direction in the entrance surface of the exit dust-proof glass 460 cannot retain the angle of 45°, the synthesized rays indicating the divided color images can be divided with the same light intensity regardless of the optical axis direction of the exit dust-proof glass 460 by the use of the 1/4 wavelength plate 610 disposed between the exit dust-proof glass 460 and the birefringent plate 710.

The liquid crystal projector according to the second embodiment described above provides the following advantages, in addition to the same advantages as the first embodiment.

Since a plurality of functional elements are bonded in the liquid crystal unit 900, the total thickness of the liquid crystal unit is increased but the distance between the exit surface of the birefringent plate 710 having a function as a dust-proof glass and the pixel display surface of the liquid crystal light valve 440 is also increased. Accordingly, even when particles such as large dust are attached to the exit surface of the birefringent plate 710, it is possible to prevent deterioration in quality of the projected image because the distance from the focal position of the projection lens 800 is great.

Since the 1/4 wavelength plate 610 and the birefringent plate 710 are disposed inside the liquid crystal unit 900, the space efficiency and the workability of assembly are enhanced in comparison with the case that the 1/4 wavelength plate 610 and the birefringent plate 710 are disposed separately, thereby contributing to reduction in cost.

### Third Embodiment

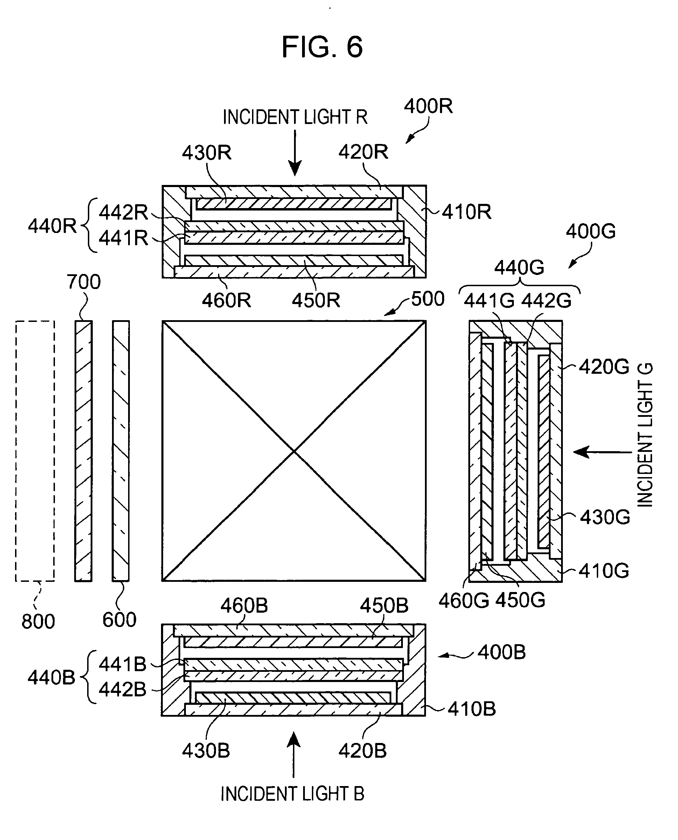

Fig. 6 is a partial plan view illustrating an optical system according to a third embodiment of the invention.

The third embodiment of the invention provides a liquid crystal projector having a structure that the 1/4 wavelength plate 600 and the birefringent plate 700 as the second birefringent plate in the first embodiment are omitted. Accordingly, the structure and the transmission state of the ray exiting from the prism 500 are similar to the first embodiment and thus description thereof will be omitted.

The first embodiment and the second embodiment provide the liquid crystal projector having a dividing function that the respective synthesized rays indicating the synthesized color image enlarged and projected onto the projection plane of the screen 100 through the projection lens 800 are divided into four points of a tetragonal shape in the horizontal and vertical directions, but the third embodiment provides a liquid crystal projector having a dividing function of dividing the respective synthesized rays into two points in the horizontal direction.

A ray is divided into two linear polarized rays of a normal ray and an abnormal ray by the liquid crystal unit 400 (the exit dust-proof glass 460 having birefringence) and modulated rays of three colors R, G, and B are synthesized in a unit of the two linear polarized rays by the prism 500. The respective synthesized rays indicating a synthesized color image are enlarged and projected onto the projection plane of the screen 10 through the projection lens 800.

The rays indicating the synthesized color image are projected onto positions in which the linear polarized rays divided into normal rays and abnormal rays are spaced apart from each other by a predetermined distance set in the horizontal and vertical directions at the time of enlargement and projection. Accordingly, the abnormal rays divided in the vertical direction two-dimensionally overlap with the vertically formed black matrixes of the image projected with the normal rays, thereby making the black matrixes almost invisible. As a result, the quality of the image enlarged and projected onto the projection plane of the screen 10 is improved.

Although it has been described that the third embodiment provides the dividing function of dividing the normal rays and the abnormal rays into two points in the horizontal direction, the division direction is regulated by the optical axis direction of the exit dust-proof glass 460 having birefringence and the division direction may be the vertical direction by changing the optical axis direction. The distance between the normal ray and the abnormal ray is proportional to the thickness of the exit dust-proof glass 460 and the thickness may be set to a desired value in consideration of the width of the light block portions (black matrix) partitioning the pixels.

In the liquid crystal projector, the number of pixels is increased and the area (width) of the light block portions (black matrix) is decreased with increase in resolution. Accordingly, even when the liquid crystal projector has the two-point division function, the black matrix is almost invisible. In addition, since the 1/4 wavelength plate 600 and the birefringent plate 700 are not provided, it is possible to provide a liquid crystal projector at low cost.

The invention is not limited to the above-mentioned embodiments, but may be variously modified in forms and details without departing from the gist of the invention. For example, the following modifications can be considered.

### First Modified Example

In the above-mentioned first to third embodiments, by bonding the entrance polarizing plate 430 and the exit polarizing plate 450 to the surfaces of the entrance dust-proof glass 420 and the exit dust-proof glass 460 made of crystallized quartz having high heat conductivity, respectively, the increase in temperature of the polarizing plates is suppressed. In addition, a cooling device for forcibly cooling the polarizing plates, for example, a cooling fan, may be provided in the liquid crystal projector. By providing the cooling device, it is possible to prevent dust or the like from being attached to the surfaces of the dust-proof glasses and to further suppress the increase in temperature of the liquid crystal light valves or the polarizing plates.

### Second Modified Example

Although it has been described in the above-mentioned embodiments that the entrance polarizing plate 430 and the exit polarizing plate 450 are disposed apart from the entrance surface and the exit surface of the liquid crystal light valve 440, respectively, the polarizing plates may be disposed close to the surfaces of the liquid crystal light valve 440. Even when the polarizing plates are disposed close to the surfaces of the liquid crystal light valve 440, the same advantage can be obtained.

### Third Modified Example

In the above-mentioned embodiments, a antireflection film for preventing the reflection of light from the interface may be formed on one surface (entrance surface) or both surfaces (entrance surface and exit surface) of each of the entrance dust-proof glass 420 and the exit dust-proof glass 460. By forming the antireflection film, it is possible to enhance the light transmittance of the dust-proof glasses.

### Fourth Modified Example

Although it has been described in the above-mentioned that the liquid crystal projector is a transmissive liquid crystal projector employing a so-called transmissive liquid crystal light valve in which the liquid crystal light valve (liquid crystal panel) as the light modulating means transmits light, the invention can be applied to a reflective liquid crystal projector employing a so-called reflective liquid crystal panel in which a liquid crystal panel reflects light. Even when the invention is applied to the reflective liquid crystal projector, the same advantages as the transmissive liquid crystal projector can be obtained.

### Fifth Modified Example

Instead of the crystal 1/4 wavelength plate as the 1/4 wavelength plate 600 in the first embodiment and the second embodiment, a crystallized-quartz phase plate can be used.

The crystallized-quartz phase plate includes only one crystallized-quartz plate and has a function as a so-called depolarizing plate. The thickness of the crystallized-quartz plate is not limited but can be set properly. While the 1/4 wavelength plate restricts the phase difference to a 1/4 wavelength, the crystallized-quartz phase plate periodically repeats the 1/4 phase difference every wavelength. Therefore, the same characteristic as the crystal 1/4 wavelength plate is obtained.

The following advantages are obtained by employing the crystallized-quartz phase plate.

Since the 1/4 phase difference of an incident ray is periodically repeated every wavelength in the crystallized-quartz plate, the light emitted from a light source such as a halogen lamp can be used in a wide bandwidth. Since the crystallized-quartz phase plate has a phase cycle which becomes shorter with increase in thickness of the crystallized-quartz plate, color blur is little visible. It is preferable for practical use that the thickness of the crystallized-quartz plate used as the crystallized-quartz phase plate is in the range of 0.3 to 1.5 mm.

In the second embodiment, the exit surface of the birefringent plate 710 having a function of dust-proof glass can be further apart from the pixel display surface of the liquid crystal light valve 440, by increasing the thickness of the crystallized-quartz plate. Accordingly, even when dust or the like is attached to the exit surface of the birefringent plate 710, it is possible to further prevent deterioration in quality of an image projected onto the projection plane of the screen 10.

## Claims

1. A liquid crystal projector comprising:
a light source unit;
colored-ray dividing means for dividing light emitted from the light source unit into three colored rays;
light modulating means including a liquid crystal light valve and serving to modulate the three colored rays on the basis of a given image signal and to emit the modulated rays which are predetermined linear polarized rays;
colored-ray synthesizing means for synthesizing the modulated rays; and
optical projection means for enlarging and projecting the synthesized ray synthesized by the colored-ray synthesizing means onto a screen,
wherein a first dust-proof glass, which is made of crystallized quartz or sapphire having a uniaxial crystal structure and serves to prevent dust from being attached to the light modulating means, is disposed on an entrance side of the liquid crystal light valve of the light modulating means and a second dust-proof glass, which is made of crystallized quartz or sapphire having birefringence and serves to prevent dust from being attached to the light modulating means, is disposed on an exit side thereof.

2. The liquid crystal projector according to Claim 1, wherein a 1/4 wavelength plate and a birefringent plate having birefringence are disposed in an optical path between the second dust-proof glass having birefringence and the optical projection means, sequentially from an exit surface of the second dust-proof glass.

3. The liquid crystal projector according to Claim 1 or 2, wherein the light modulating means, the first dust-proof glass, and the second dust-proof glass are retained in a rectangular tube-shaped support member.

4. The liquid crystal projector according to Claim 2 or 3, wherein the 1/4 wavelength plate and the birefringent plate having birefringence are disposed in an optical path between the second dust-proof glass having birefringence and the colored-ray synthesizing means.

5. The liquid crystal projector according to Claim 2, 3 or 4, wherein the 1/4 wavelength plate is one of a crystallized-quartz 1/4 wavelength plate, a 1/4 retardation film, a polymer liquid crystal film, and a crystallized-quartz phase plate.

6. The liquid crystal projector according to Claim 3, 4 or 5, wherein the light modulating means, the first dust-proof glass, and the second dust-proof glass are adhered to and retained in the rectangular tube-shaped support member with a UV-curable adhesive.

7. The liquid crystal projector according to Claim 4, 5 or 6, wherein the light modulating means, the first dust-proof glass, the second dust-proof glass, the 1/4 wavelength plate, and the birefringent plate are retained in a rectangular tube-shaped support member.

8. The liquid crystal projector according to Claim 7 when dependent on claim 4, wherein the 1/4 wavelength plate is one of a crystallized-quartz 1/4 wavelength plate, a 1/4 retardation film, a polymer liquid crystal film, and a crystallized-quartz phase plate,
wherein the second dust-proof glass, the 1/4 wavelength plate, and the birefringent plate are integrally bonded to each other,
wherein when the 1/4 wavelength plate is one of the crystallized-quartz 1/4 wavelength plate and the crystallized-quartz phase plate, the second dust-proof glass and the 1/4 wavelength plate are bonded to each other with a UV-curable adhesive and the 1/4 wavelength plate and the birefringent plate are bonded to each other with a UV-curable adhesive, and
wherein when the 1/4 wavelength plate is one of the 1/4 retardation film and the polymer liquid crystal film, the second dust-proof glass and the 1/4 wavelength plate are bonded to each other with an acrylic adhesive and the 1/4 wavelength plate and the birefringent plate are bonded to each other with an acrylic adhesive.
